# EUROPEAN PATENT APPLICATION

(11) **EP 4 683 249 A1**
(43) Date of publication of application: **21.01.2026**
(21) Application number: 25165362.2
(22) Date of filing: 21.03.2025
(51) Int. Cl.: H04B 10/40

(54) **LIGHT GUIDING PIPE AND LIGHT TRANSCEIVER**

(30) Priority: 18.07.2024 TW 113126915
(71) Applicant: Pegatron Corporation, Taipei City 112 (TW)
(72) Inventor: LIU, Lun I, Taipei City (TW); TSAO, Wei-Chun, Taipei City (TW); LIAO, Min Yu, Taipei City (TW)
(74) Representative: Haseltine Lake Kempner LLP

(57) **Abstract**

The disclosure provides a light guiding pipe (120A, 120B) including a pipe body (130A, 130B) with a first end (131), a second end (132) and a third end (133), a first lens (151), a second lens (152), a third lens (153), and a beam splitter (140). The first lens (151) is disposed at the first end (131) and on a first optical path of a first light beam (L1). The second lens (152) is disposed at the second end (132) and on a second optical path of a second light beam (L2). The third lens (153) is disposed at the third end (133) and on the first second optical paths. The first light beam (L1) enters from the first end (131) and leaves from the third end (133). The second light beam (L2) enters from the third end (133) and leaves from the second end (132).

## Description

### BACKGROUND

### Technical Field

The disclosure relates to a light guiding pipe and a light transceiver.

### Description of Related Art

In wireless optical communication systems known as LiFi (light fidelity), the light transmitting end primarily utilizes two single optical bands (wavelengths ranging from 100um to 10nm, such as 850nm or 940nm) for transmitting optical signals. On the other hand, at the light receiving end, light receiving elements with a reception range covering wavelengths from 100 um to 10 nm are utilized to receive optical signals.

The disadvantage of this approach is that the scattering angle of the light source at the light transmitting end will be too large, resulting in a limitation of the effective propagation distance of the optical signal. Furthermore, the optical signal also experiences light loss at large-angle edges. On the other hand, since the light receiving end has a wider reception range for optical bands, it is difficult to only receive light of single wavelength and is prone to receiving light signals in diverse optical bands. Besides, the received optical signals are hard to be converged into beams. These problems will reduce the photoelectric conversion efficiency of the photodiode, thereby affecting the stability of the wireless optical communication signal.

### SUMMARY

A light guiding pipe and a light transceiver are provided in the disclosure, in which optical signals are enabled to be transmitted and received in free space, thereby improving optical signal transmission efficiency.

A light guiding pipe is disclosed in the disclosure, including the following components. A pipe body has a first end, a second end, and a third end. A first lens is located at the first end and on a first optical path of a first light beam. A second lens is located at the second end and on a second optical path of a second light beam. A third lens is located at the third end and on both the first optical path of the first light beam and the second optical path of the second light beam. A beam splitter is located inside the pipe body, on both the first optical path of the first light beam and the second optical path of the second light beam. The first light beam enters the pipe body from the first end, passes through the beam splitter, and leaves the pipe body from the third end. The second light beam enters the pipe body from the third end, passes through the beam splitter, and leaves the pipe body from the second end.

According to some embodiments, the first light beam is collimated after entering the first lens. After the first light beam passes through the third lens along the first optical path, the first light beam diverges with a divergence angle relative to an optical axis of the first light beam. After the second light beam enters the third lens, it is converged on the beam splitter and is converged by the second lens.

According to some embodiments, the divergence angle is less than or equal to 45 degrees.

According to some embodiments, the first lens, the second lens, and the third lens are all biconvex lenses.

According to some embodiments, a material of the first lens, the second lens, and the third lens is acrylic.

According to some embodiments, the beam splitter is configured to reflect the first light beam and transmit the second light beam, or transmit the first light beam and reflect the second light beam.

According to some embodiments, an interior of the pipe body is filled with an optical material, and the optical material includes polyester, polyurethane, or epoxy resin.

According to some embodiments, an outer surface of the pipe body has a light-shielding coating, and the light-shielding coating is configured to reflect the first light beam and the second light beam.

According to some embodiments, the pipe body is T-shaped, of which the first end is opposite the third end.

According to some embodiments, the pipe body is h-shaped, of which the first end is opposite the third end.

A light transceiver is provided in the disclosure, including a light guiding pipe, a light source and a light receiver. The light source is configured to emit the first light beam with a first wavelength. The light receiver is configured to receive the second light beam with a second wavelength, and the second wavelength is different from the first wavelength.

According to some embodiments, the light transceiver further includes: a zero-degree filter disposed between the light guiding pipe and the light receiver.

According to some embodiments, the light transceiver further includes a first light shield and a second light shield. The first light shield is configured to cover the light source and the first lens. The second light shield is configured to cover the light receiver and the second lens.

According to some embodiments, the light source is a light-emitting diode or a laser diode.

According to some embodiments, the light receiver is a photodiode.

According to some embodiments, the first wavelength is either 850 nm or 940 nm while the second wavelength is the other.

Based on the above, the light guiding pipe and light transceiver proposed in the disclosure facilitate transmissions and receptions of optical signals in free space, the transmitted optical signals may have angular propagation, and the received optical signals may be converged to reduce light loss, and therefore the photoelectric conversion efficiency of existing components is improved.

### BRIEF DESCRIPTION OF THE DRAWINGS

FIG. 1 is a schematic diagram of an optical communication system according to an embodiment of the disclosure.
FIG. 2 is a schematic diagram of a light guiding pipe according to an embodiment of the disclosure.
FIG. 3 is a schematic diagram of a light guiding pipe according to another embodiment of the disclosure.

### DETAILED DESCRIPTION OF DISCLOSED EMBODIMENTS

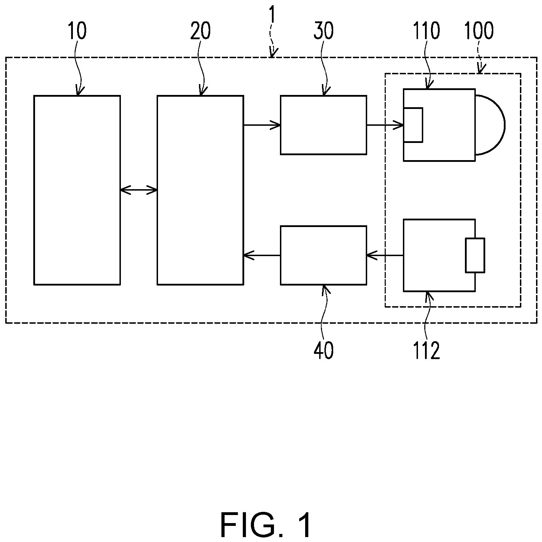

FIG. 1 is a schematic diagram of an optical communication system according to an embodiment of the disclosure. Referring to FIG. 1, in some embodiments, the optical communication system 1 includes a digital signal processing IC 10, an analog front-end IC 20, a driver IC 30, a trans-impedance amplifier 40, and a light transceiver 100.

When the optical communication system 1 is to transmit an optical signal, the digital signal processing IC 10 sends a digital control signal to the analog front-end (AFE) IC 20. In some embodiments, the digital signal processing IC 10 may be a central control unit (CPU), a microprocessor, or other components with similar functions, but the disclosure is not limited thereto.

The analog front-end IC 20 converts the received digital control signal into an analog signal through the analog front-end IC and transmits the converted analog signal to the driver IC 30 to control the light source 110 of the light transceiver 100.

Specifically, the analog front-end IC 20 is composed of analog circuits and digital-analog hybrid circuits to perform many tasks, including signal capture, analog filtering, digital-to-analog conversion (DAC), and power amplification. The analog front-end IC 20 may convert the received digital control signal into an analog signal.

The driving IC 30 is coupled to the light source 110 in the light transceiver 100. The driver IC 30 receives the analog signal from the analog front-end IC 20 and is configured to control the light source 110 in the light transceiver 100 so that the light source 110 emits quickly flashing optical signals in a specified optical band to transmit optical data into free space.

In some embodiments, the light source 110 may be a light-emitting diode or a laser diode, or other components with similar functions, but the disclosure is not limited thereto.

On the other hand, when the optical communication system 1 is to receive optical signals, the light receiver 112 of the light transceiver 100 receives the optical signals from the free space, converts the optical signals into an electrical signal and transmits it to the trans-impedance amplifier (TIA) 40.

In some embodiments, the light receiver 112 may be a photodiode (PD) or other elements with similar functions, but the disclosure is not limited thereto.

The trans-impedance amplifier 40 is an amplifier that amplifies an input current signal and then converts it into a voltage signal for output. Therefore, the trans-impedance amplifier 40 amplifies the current signal from the light receiver 112 and transmits the amplified electrical signal to the analog front-end IC 20.

The analog front-end IC 20 converts the electrical signal from the trans-impedance amplifier 40 into a digital signal and transmits it to the digital signal processing IC 10, thereby forming a wireless optical communication system structure.

The structure of the light transceiver is described in detail below.

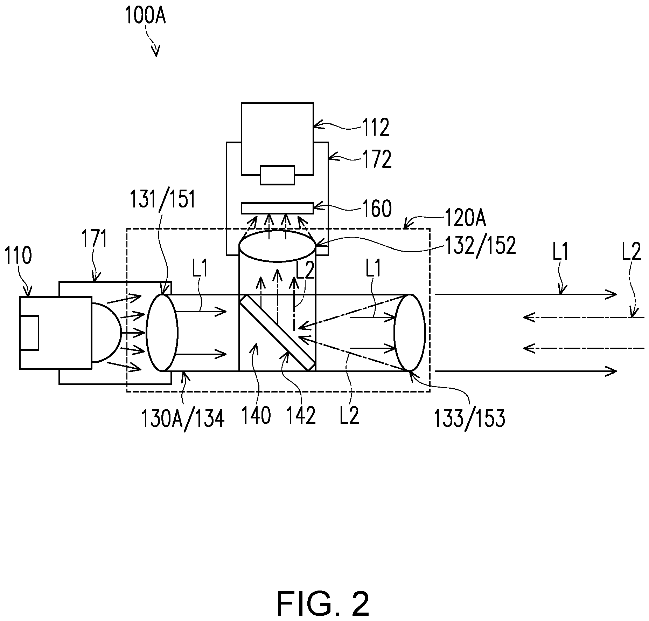

FIG. 2 is a schematic diagram of a light transceiver according to an embodiment of the disclosure. Referring to FIG. 2, the light transceiver 100A is an embodiment of the light transceiver 100 in FIG. 1.

The light transceiver 100A includes a light source 110, a light receiver 112, and a light guiding pipe 120A. The light guiding pipe 120A includes a pipe body 130A and a beam splitter 140.

The light source 110 is configured to emit a first light beam L1 of a first wavelength. As shown in FIG. 1, the light source 110 is coupled to the driving IC 30 and receives a signal from the driving IC 30 to emit a first light beam L1 and transmit information to the external space. In some embodiments, the light source 110 is a light-emitting diode or a laser diode, or an element with similar functions, but the disclosure is not limited thereto.

The light receiver 112 is configured to receive a second light beam L2 of a second wavelength. The second light beam L2 is an optical signal from free space, and the second wavelength is different from the first wavelength.

In some embodiments, the first wavelength of the first light beam L1 emitted by the light source 110 is either 850 nanometers (nm) or 940 nm while the second wavelength of the second light beam received by the light receiver 112 is the other one. However, in other embodiments, the first wavelength or the second wavelength may also be other values, and the disclosure is not limited thereto.

The pipe body 130A has a first end 131, a second end 132, and a third end 133. As shown in FIG. 2, the pipe body 130A is T-shaped, and the first end 131 faces the third end 133. The second end 132 is located between the first end 131 and the third end 133. The light source 110 is located outside the first end 131 of the pipe body 130A. The light receiver 112 is located outside the second end 132 of the pipe body 130A.

The beam splitter 140 is located inside the pipe body 130A and on both the first optical path of the first light beam L1 and the second optical path of the second light beam L2. Specifically, the beam splitter 140 is inside the pipe body 130A.

The beam splitter 140 includes two right-angled triangular prisms. The hypotenuses of the two right-angled triangular prisms are glued by polyester, polyurethane, or epoxy resin to form a cube-shaped beam splitter 140.

The hypotenuse of one of the two right-angled triangular prisms is coated with an optical film 142 to filter the optical signal and reflect or refract the optical signal. In this embodiment, the optical film 142 allows the first light beam L1 to go through the beam splitter 140 while reflecting the second light beam L2, thereby achieving the beam splitting. In another embodiment, according to different configurations, the optical film 142 may also reflect the first light beam L1 and allow the second light beam L2 to go through the beam splitter 140.

In some embodiments, the material of the right-angled triangular prism may be glass or acrylic, or other suitable materials, but the disclosure is not limited thereto.

In some embodiments, an appropriate material may be selected for the optical film 142 according to the wavelengths of the first light beam L1 and the second light beam L2 and the required optical properties, such as a metal film or a film with other similar properties, but the disclosure is not limited thereto.

As shown in FIG. 2, when the light transceiver 100A transmits an optical signal, a first light beam L1 emitted by the light source 110 enters the pipe body 130A from the first end 131, passes through the beam splitter 140, and leaves the pipe body 130A from the third end 133.

On the other hand, when the light transceiver 100A receives an optical signal, the second light beam L2 enters the pipe body 130A from the third end 133, passes through the beam splitter 140, leaves the pipe body 130A from the second end 132 after being reflected by the beam splitter 140, and enters the light receiver 112.

The light transceiver 100A transmits and receives optical signals from/to the free space through the above optical paths of the first light beam L1 and the second light beam L2.

As shown in FIG. 2, the light transceiver 100A further includes a first lens 151, a second lens 152, and a third lens 153.

The first lens 151 is located at the first end 131 and is located on the first optical path of the first light beam L1. The second lens 152 is located at the second end 132 and is located on the second optical path of the second light beam L2. The third lens 153 is located at the third end 133 and is located on both the first optical path of the first light beam L1 and the second optical path of the second light beam L2.

In some embodiments, the first lens 151, the second lens 152, and the third lens 153 are all biconvex lenses.

In some embodiments, the material of the first lens 151, the second lens 152, and the third lens 153 may be acrylic.

When the light transceiver 100A transmits an optical signal, the light source 110 emits a first light beam L1, and the first light beam L1 is collimated after entering the first lens 151. The first light beam L1 meets the beam splitter 140 along the first light path and passes through the beam splitter 140. After the first light beam L1 passes through the third lens 153 along the first light path, the first light beam L1 diverges with a divergence angle relative to the optical axis of the first light beam L1. According to some embodiments, the divergence angle is less than or equal to 45 degrees.

After the first light beam L1 passes through the third lens 153, the first light beam L1 leaves the light transceiver 100A and enters the free space. Therefore, when the first light beam L1 passes through the third lens 153, the third lens 153 diverges the first light beam L1 to have the divergence angle, thereby expanding the transmission angle of the first light beam L1 and increasing the signal reception range.

When the light transceiver 100A receives an optical signal, the optical signal enters the light transceiver 100A from the external free space in the form of a second light beam L2. Therefore, the second light beam L2 may enter the light transceiver 100A at various angles.

After the second light beam L2 enters the third lens 153, the second light beam L2 is converged on the beam splitter 140 by the third lens 153. The beam splitter 140 reflects the second light beam L2, so that the second light beam L2 enters the second lens 152 along the second optical path and is converged on the light receiver 112 by the second lens.

Thus, by converging the second light beam L2 through the third lens 153 and the second lens 152, the second light beam L2 may be effectively converged on the light receiver 112 to improve the signal receiving efficiency of the light receiver 112.

As shown in FIG. 2, the light transceiver 100A further includes a zero-degree filter 160 disposed between the pipe body 130A and the light receiver. Specifically, the zero-degree filter 160 is disposed between the second lens 152 and the light receiver 112. When the second light beam L2 enters the light transceiver 100A from the free space, it may be accompanied by light with various wavelengths different from that of the second light beam L2. When the second light beam L2 passes through the zero-degree filter 160, the second light beam L2 may be filtered to exclude the wavelengths irrelevant to the light receiver 112, so that the second light beam L2 may be fully absorbed by the light receiver 112 to improve the efficiency of the light receiver 112.

The light transceiver 100A includes a first lens 151, a second lens 152, a third lens 153, and a beam splitter 140. After the above components are fixed by the mold, the interior of the light transceiver 100A is filled with optical material to fix the above optical components. According to some embodiments, the optical material includes polyester, polyurethane, or epoxy resin. Therefore, the interior of the light transceiver 100A is filled with optical materials and has a solid structure.

When the first light beam L1 and the second light beam L2 are transmitted in the light transceiver 100A, some of the first light beam L1 and the second light beam L2 are scattered by the outer wall of the light transceiver 100A. In order to prevent the first light beam L1 and the second light beam L2 from exiting the light transceiver 100A, and also to prevent external light from entering the light transceiver 100A, the outer surface 134 of the pipe body 130A has a light-shielding coating, which is configured to reflect the first light beam L1 and the second light beam L2 so that the first light beam L1 and the second light beam L2 do not leak out of the light transceiver 100A. On the other hand, the light-shielding coating may also prevent external light from entering the light transceiver 100A and interfering with the first light beam L1 and the second light beam L2.

To further improve the transmission efficiency of the first light beam L1 and the second light beam L2, the light transceiver 100A further includes a first light shield 171 and a second light shield 172.

The first light shield 171 is configured to cover the light source 110 and the first lens 151. The second light shield 172 is configured to cover the light receiver 112 and the second lens 152. The first light shield 171 may prevent the first light beam L1 from leaking out when it enters the first lens 151 and may also prevent external light from entering the light guiding pipe 120A through the first lens 151. When the second light beam L2 enters the light receiver 112 through the third lens 153, the second light shield 172 may prevent external light from entering the light receiver 112 to improve the receiving efficiency of the light receiver 112. The second light shield 172 may also prevent external light from entering the light guiding pipe 120A through the second lens 152.

In other embodiments, in the light transceiver 100A shown in FIG. 2, the positions of the light source 110 and the light receiver 112 may be interchanged, that is, the light source 110 is located at the second end 132 of the pipe body 130A, and the light receiver 112 is located at the first end 131 of the pipe body 130A. Under this circumstance, the optical film 142 of the beam splitter 140 reflects the first light beam L1 to enter the third lens 153. On the other hand, the second light beam L2 goes through the beam splitter 140 and enters the first lens 151.

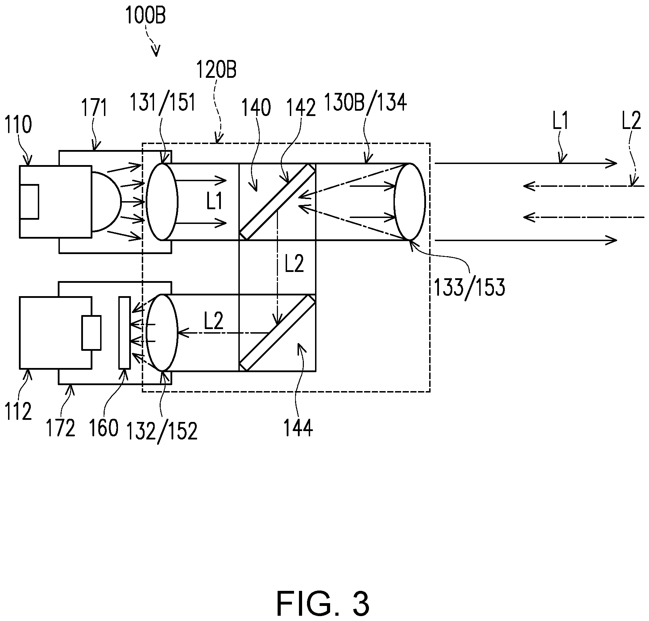

FIG. 3 is a schematic diagram of a light transceiver according to another embodiment of the disclosure. Referring to FIG. 3, the light transceiver 100B shown in FIG. 3 has a similar structure to the light transceiver 100A shown in FIG. 2, so the similarities are not repeated herein. The differences between the light transceiver 100B from the light transceiver 100A are as follows.

As shown in FIG. 3, the light transceiver 100B has a light guiding pipe 120B. The light guiding pipe 120B includes a pipe body 130B. The pipe body 130B is h-shaped, of which the first end 131 faces the third end 133. The first end 131 and the second end 132 are located on the left side, and the third end 133 is located on the right side. Therefore, the light source 110 and the light receiver 112 are disposed in correspondence with the first end 131 and the second end 132 and may be located on the same side of the light transceiver 100B, which may effectively reduce the volume of the light transceiver 100B.

On the other hand, since the pipe body 130B is h-shaped, the pipe body 130B further includes a reflector 144, which is located on the light path of the second light beam L2. After being reflected by the beam splitter 140, the second light beam L2 may be reflected by the reflector 144 and enter the light receiver 112.

In other embodiments, in the light transceiver 100B shown in FIG. 3, the positions of the light source 110 and the light receiver 112 may be interchanged, that is, the light source 110 is located at the second end 132 of the pipe body 130B, and the light receiver 112 is located at the first end 131 of the pipe body 130B. Under this circumstance, the first light beam L1 is reflected by the reflector 144 and then meets the optical film 142 of the beam splitter 140. The optical film 142 reflects the first light beam L1 towards the third lens 153. On the other hand, the second light beam L2 goes through the beam splitter 140 and enters the first lens 151.

In summary, the light guiding pipe and light transceiver proposed in the disclosure facilitate transmissions and receptions of optical signals in free space. Through more effective angle scattering and converging the received optical signal into a beam and reducing the convergence area, the scattering loss of the light source and the problem of convergence are improved, the utilization rate of the light source is increased, and the photoelectric conversion efficiency of the optical component is improved.

## Claims

1. A light guiding pipe (120A, 120B), comprising:
A pipe body (130A, 130B), having a first end (131), a second end (132), and a third end (133);
a first lens (151), located at the first end (131) and on a first optical path of a first light beam (L1);
a second lens (152), located at the second end (132) and on a second optical path of a second light beam (L2);
a third lens (153), located at the third end (133) and on both the first optical path of the first light beam (L1) and the second optical path of the second light beam (L2); and
a beam splitter (140), located inside the pipe body (130A, 130B), located on both the first optical path of the first light beam (L1) and the second optical path of the second light beam (L2),
wherein the first light beam (L1) enters the pipe body (130A, 130B) from the first end (131), passes through the beam splitter (140), and leaves the pipe body (130A, 130B) from the third end (133),
wherein the second light beam (L2) enters the pipe body (130A, 130B) from the third end (133), passes through the beam splitter (140), and leaves the pipe body (130A, 130B) from the second end (132).

2. The light guiding pipe (120A, 120B) according to claim 1, wherein
the first light beam (L1) is collimated after entering the first lens (151), the first light beam (L1) diverges with a divergence angle relative to an optical axis of the first light beam (L1) after the first light beam (L1) passes through the third lens (153) along the first optical path, and
after the second light beam (L2) enters the third lens (153), the second light beam (L2) is converged on the beam splitter (140) and is converged by the second lens (152), wherein the divergence angle is less than or equal to 45 degrees.

3. The light guiding pipe (120A, 120B) according to claim 1 or 2, wherein the first lens (151), the second lens (152), and the third lens (153) are all biconvex lenses.

4. The light guiding pipe (120A, 120B) according to claim 1, 2 or 3, wherein the beam splitter (140) is configured to reflect the first light beam (L1) and transmit the second light beam (L2) or transmit the first light beam (L1) and reflect the second light beam (L2).

5. The light guiding pipe (120A, 120B) according to claim 1, 2, 3 or 4, wherein an interior of the pipe body (130A, 130B) is filled with an optical material, and the optical material comprises polyester, polyurethane, or epoxy resin.

6. The light guiding pipe (120A, 120B) according to claim 1, 2, 3, 4 or 5, wherein an outer surface (134) of the pipe body (130A, 130B) has a light-shielding coating, and the light-shielding coating is configured to reflect the first light beam (L 1) and the second light beam (L2).

7. The light guiding pipe (120A, 120B) according to claim 1, 2, 3, 4, 5 or 6, wherein the pipe body (130A, 130B) is T-shaped, wherein the first end (131) is opposite the third end (133); or the pipe body (130A, 130B) is h-shaped, wherein the first end (131) is opposite the third end (133).

8. A light transceiver (100, 100A, 100B), comprising:
the light guiding pipe (120A, 120B) according to claim 1;
a light source (110), configured to emit the first light beam (L1) with a first wavelength; and
a light receiver (112), configured to receive the second light beam (L2) with a second wavelength, wherein the second wavelength is different from the first wavelength.

9. The light transceiver (100, 100A, 100B) according to claim 8, further comprising:
a zero-degree filter (160), disposed between the light guiding pipe (120A, 120B) and the light receiver (112).

10. The light transceiver (100, 100A, 100B) according to claim 8 or 9, further comprising:
a first light shield (171), configured to cover the light source (110) and the first lens (151); and
a second light shield (172), configured to cover the light receiver (112) and the second lens (152).

11. The light transceiver (100, 100A, 100B) according to claim 8, 9, or 10, wherein the first wavelength is either 850 nm or 940 nm while the second wavelength is the other.
